# EUROPEAN PATENT APPLICATION

(11) **EP 4 342 746 A1**
(43) Date of publication of application: **27.03.2024**
(21) Application number: 22197585.7
(22) Date of filing: 23.09.2022
(51) Int. Cl.: B60S 1/40

(54) **WIPER BLADE ADAPTER FOR A MOTOR VEHICLE**

(71) Applicant: Valeo Systèmes d'Essuyage, 78322 Le Mesnil Saint Denis (FR)
(72) Inventor: SANTOYO, Mirna, 32575 JUAREZ CIUDAD (MX)
(74) Representative: Valeo Visibility

(57) **Abstract**

The present invention relates to the adapter (120) for a wiper blade (105) comprising: a body portion (155a), and a head portion (155b) comprising an abutment portion (160). The body portion (155a) being configured to slide relatively to the yoke portion (140) of the wiper arm (110) until a distal end of the yoke portion (140) comes into contact with the abutment portion (160) of the head portion (155b). The adapter further comprises a magnetic connection region (190) intended to receive at least one magnetic element (195), the at least magnetic element (195) is configured to cooperate with the yoke portion (140) to secure the wiper arm (110) on the adapter (120) when the distal end of the yoke portion (140) is in contact with abutment portion (160).

## Description

### TECHNICAL FIELD

The present invention relates to the field of wiping and/or cleaning glazed surfaces of motor vehicles. In particular, the present invention relates to a windscreen wiper blade adapter, a wiper blade equipped with such an adapter, a wiping system comprising such a wiper blade, and a method for assembling such a wiping system.

### STATE OF ART

In general, a wiping system for a motor vehicle comprises at least one wiper arm intended to perform an angular back-and-forth movement, to which is connected a wiper blade which comprises a wiper rubber. It is this wiper rubber which is in contact with the glazed surface of the vehicle and, driven by the angular back-and-forth movement of the wiper arm, will wipe and/or clean the glazed surface in the event of bad weather or washing of said glazed surface, in order to ensure a clear and unobstructed view for the driver of the vehicle. To ensure the connection between the wiper blade and the wiper arm, the wiping system is equipped with an adapter which interacts with the wiper blade on the one hand, and with an end of the wiper arm, on the other hand.

It is known practice to provide such a connection by means of a mechanical connection. The wiper blade adapter generally has a body portion configured to be inserted into a yoke portion of the wiper arm such that the body portion extends at least in part between two substantially parallel lateral walls of the yoke portion. The body of the adapter generally comprises an actuating button, for example, a push button which is inserted by elastic snap-fitting into an orifice on a transverse wall of the yoke portion in order to lock the adapter with respect to the yoke portion. In addition, the conventional wiper blade adapters comprise a tongue portion which is elastically deformable and connected to the push button, particularly, the push button projects from the tongue portion. The push button serves to deform the tongue portion from its free position during the operation of the push button.

During the disassembly of the wiper arm from the wiper blade adapter, the push button has to exert pressure on the tongue portion, and this may result in damaging the push button and the tongue portion when operated frequently by pressing the push button to undo the connection. This may impair the wiping quality. In some cases, the wiper blade adapter may be disengaged from the wiper arm inadvertently when the push button and/or the tongue portion gets damaged. Further, as the wiper blade adapter is being adapted to engage with the yoke portion of the wiper arm which is made of metal, and the yoke portion is susceptible to corrosion. Frequently engaging and disengaging the wiper blade adapter and the wipe arm by means of the push button may cause corrosion on the yoke portion of the wiper arm.

### SUMMARY OF THE INVENTION

An object of the invention is to alleviate the problems raised by the prior arts. To be more precise, an object of the invention is to provide a wiper blade adapter, which facilitates easy assembly and disassembly of a wiper arm and the wiper blade adapter in safe and reliable manner.

Another object of the present invention is to provide a wiper blade adapter which ensures to provide a good wiping quality.

Yet another object of the present invention is to provide a wiper blade adapter which would reduce the risk of corrosion on a yoke portion of the wiper arm to which the wiper blade adapter would be engaged.

To achieve these objectives, the present invention provides an adapter for a vehicle wiper blade, the adapter being configured to engage with a yoke portion of a vehicle wiper arm such that the wiper blade is secured on the wiper arm, and the adapter extends in a longitudinal direction. The adapter comprising: a body portion, a head portion comprising an abutment portion, the body portion being configured to slide relatively to the yoke portion of the wiper arm until a distal end of the yoke portion comes into contact with the abutment portion of the head portion, and the adapter further comprises a magnetic connection region comprising at least one magnetic element. The at least one magnetic element is configured to cooperate with the yoke portion to secure the wiper arm on the adapter when the distal end of the yoke portion is in contact with abutment portion, and the magnetic connection region being located in the vicinity of the abutment portion. Thus, the yoke portion of the wiper arm is able to relatively move in longitudinal translation on the body portion of the adaptor, which is configured to interact with the wiper arm so as to lock the wiper blade adapter relative to the wiper arm in the longitudinal direction. Hence, the proposed invention ensures easy assembly and disassembly of the wiper blade adapter and the wiper arm. Advantageously, the wiper blade adapter of the proposed invention allows easy replacement of the wiper blade in the event of wear with less effort by sliding the body portion of the adapter relative to the yoke portion of the wiper arm. Further, the magnetic connection between the wiper blade adapter and the wiper arm ensures to provide continuous operation of the wiper system at all speeds while providing a good wiping quality. In addition, the magnetic connection between the wiper blade adapter and the wiper arm would be resistant to the centrifugal force caused by the angular back-and-forth movement of the wiper arm when the wiper system is in operation.

According to one characteristic of the present invention, the at least one magnetic element is made of rare-earth material such as Neodymium, Alnico, Ferrite, Samarium-cobalt, and the like. Advantageously, the magnetic connection using the magnets made of rare-earth materials provides strong magnetism, thereby the wiper blade adapter is rigidly secured to the wiper arm in a manner strong enough to withstand the mechanical forces at play when the wiping system is in operation. In an aspect, other compositions of the permanent magnet could also be considered depending on the particular needs of each implementation of the invention. Advantageously, the magnetic connection between the wiper blade adapter and the wiper arm would result in minimizing the risk of corrosion on the wiper arm.

According to one characteristic of the present invention, the at least one magnetic element is configured to exert a force of about 11 N. In other words, it is understood that the minimum force required to disengage the wiper arm from the wiper blade adapter would be about 11N. Advantageously, by using the at least one magnetic element, the adapter is rigidly secured to the wiper arm.

According to one characteristic of the present invention, the at least one magnetic element is configured to exert a force of about 30 N. According to another characteristic of the present invention, the at least one magnetic element is configured to exert a force of about 40 N.

According to one characteristic of the present invention, the abutment portion is formed by a shoulder located at the border of the head portion adjacent to the body portion. The difference in dimensions between the head and the body portion of the wiper blade adapter creates the shoulder. Advantageously, the shoulder would act as a stop means when the wiper blade adapter is engaged to the wiper arm, and ensures to maintain the connection in a longitudinal direction.

According to one characteristic of the present invention, the magnetic connection region is arranged on at least one of: at least one longitudinal sidewall of the body portion, the abutment portion, and an upper wall of the body portion. Advantageously, depending on the particular needs of each implementation of the invention and based on the space availability on the wiper blade adapter, the magnetic connection region can be arranged on the adapter.

According to one characteristic of the present invention, the at least one magnetic element is constructed in a rectangular shape or a circular shape. In one embodiment, the at least one magnetic element which is constructed in circular shape may be fixed to sidewalls of the adapter so as to lock the adapter relative to the wiper arm in the longitudinal direction. In another embodiment, the at least one magnetic element which is constructed in a rectangular shape may be fixed on a top wall of the adapter so as to lock the adapter relative to the wiper arm in the longitudinal direction.

According to one characteristic of the present invention, the at least one magnetic element is rigidly secured to the adapter by interaction of shapes, force-fitted, adhesively bonded and/or overmolded. Advantageously, the wiper blade adapter is rigidly secured to the wiper arm in a manner strong enough to withstand the mechanical forces at play when the wiping system is in operation.

According to one characteristic of the present invention, the magnetic connection region comprises a cavity to receive the at least one magnetic element. In an aspect, the magnetic connection region is a cavity so that the at least one magnetic element is embedded in thickness of the surface of the body portion of the adapter, in such a way that the upper plane of at least one magnetic element is substantially aligned with the upper plane of the body portion of the adapter.

According to one characteristic of the present invention, the magnetic element and the cavity are complementary in shape. Advantageously, by having the shapes that are complementary to each other, the wiper arm is rigidly secured to the wiper blade adapter.

According to one characteristic of the present invention, the adapter is configured to be retained in the yoke portion of the wiper arm, which abuts against the abutment portion when the wiper arm engages with the adapter.

According to one characteristic of the present invention, the head portion is connected to the body portion at one of its longitudinal ends. The head portion and the body portion together formed as a single piece.

According to one characteristic, the present invention also relates to a wiper blade of a vehicle wiping system comprising at least one adapter as has just been presented. The adapter is directly connected by a pivoting link to a connector that carries the wiper blade. A wiper blade having such an adapter can therefore be fitted to any type of vehicle having the wiper arm complementary to the wiper blade and allowing a magnetic connection and/or a mechanical connection.

According to one characteristic, the present invention also relates to a vehicle wiping system comprising a wiper arm, a linkage system, a motor, and a wiper blade as has just been presented.

Further advantages, features and details of the invention will be apparent from the following description of preferred embodiments of the invention and from the drawings.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig.1 shows a perspective view of vehicle wiping system of a motor vehicle, according to an embodiment of the present invention.
Fig.2a shows a perspective view of a wiper blade adapter of the wiping system, according to an embodiment of the present invention.
Fig.2b shows a perspective view of the wiper blade adapter of the Fig.2a from below, according to an embodiment of the present invention.
Fig.3 shows a yoke portion of a wiper arm of the wiping system according to an embodiment of the present invention.
Fig.4 shows a general view of the connection between the wiper blade adapter and a yoke portion of the wiper arm.
Fig.5 shows a perspective view of a wiper blade adapter of the wiping system having a magnetic connection region and a mechanical connection, according to another embodiment of the present invention.
Fig.6 shows a perspective view of an alternative design of a wiper blade adapter of the wiping system having a magnetic connection region, according to an embodiment of the present invention.

### DETAILED DESCRIPTION OF THE INVENTION

The description set forth below in connection with the appended drawings is intended as a description of various embodiments of the disclosed subject matter and is not necessarily intended to represent the only embodiment(s). In certain instances, the description includes specific details for the purpose of providing an understanding of the disclosed subject matter. However, it will be apparent to those skilled in the art that embodiments may be practiced without these specific details.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or" in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

Referring now to the drawings, wherein like reference numerals designate identical or corresponding parts throughout the several views. Hereinafter, exemplary embodiments of the present disclosure will be described in detail based on the drawings.

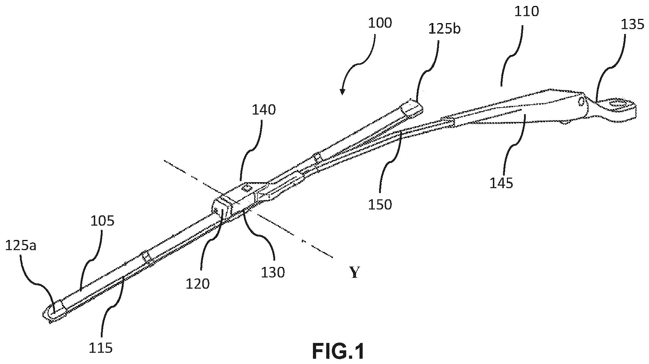

FIG. 1 illustrates a perspective view of a motor vehicle wiping system, according to an embodiment of the present invention. The wiping system 100 comprises notably a wiper blade 105 and a driving wiper arm 110 for driving the wiper blade 105. The wiper blade 105 comprises a wiper rubber 115, a wiper blade adapter 120, at least one vertebra (not visible) which stiffens the blade rubber 115 and encourages it to press against a vehicle windscreen. The wiper blade 105 may further comprise end fittings or clips 125a, 125b for attaching the blade rubber 115 and the vertebra, these fittings 125a, 125b being situated at each of the longitudinal ends of the wiper blade 105. The wiper blade 105 further comprises an intermediate connector 130 substantially at its middle. The connector 130 forms the connector between the wiper blade 105 and the wiper arm 110. The wiper arm 110 has one end connected to a motor (not shown in the figures) for rotating the wiping system 100. The wiper arm 110 comprises a drive device or a wiper arm head 135, a yoke portion 140, a retainer 145 and a wiper rod 150 crimped in the yoke portion 140. The yoke portion 140 is the element which connects to the wiper blade adapter 120 through a magnetic connection region. The yoke portion 140 is crimped on the wiper rod 150, which provides the connection between the yoke portion 140 and the rest of the wiper arm 110.

The wiper blade adapter 120 is adapted to be secured to the wiper arm 110, and provides the connection of the wiper blade 105 to the wiper arm 110 and, in particular, to the yoke portion 140 of the wiper arm 110. The wiper blade adapter 110 is mounted on the connector 130 so as to maintain a degree of freedom to pivot about an articulation axis Y which is a transverse axis substantially perpendicular to the longitudinal axis of the wiper blade 105. This degree of freedom allows the blade to pivot with respect to the wiper arm 110 and thus allows the wiper blade 105 to follow the curvature of the windscreen as it moves.

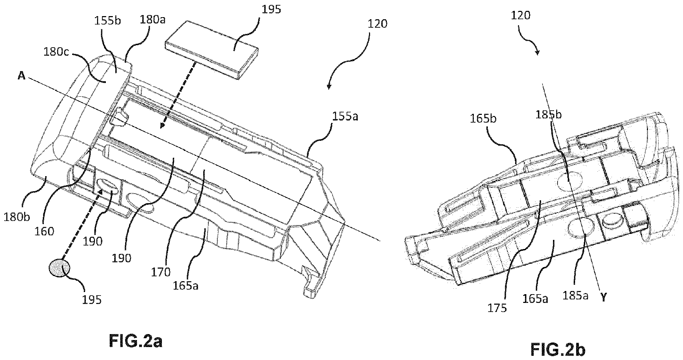

Fig.2a shows a perspective view of a wiper blade adapter of the wiping system, according to an embodiment of the present invention, and Fig.2b shows a perspective view of the wiper blade adapter of the Fig.2a from below, according to an embodiment of the present invention. The wiper blade adapter 120 being shown in the Fig.2a and the Fig.2b configured to engage with the yoke portion 140 of the wiper arm 110 such that the wiper blade 105 is secured to the wiper arm 110. According to this embodiment of the present invention, the wiper blade adapter 120 is intended to cooperate with the yoke portion 140 of the wiper arm 110 so as to lock the wiper blade adapter 120 with respect to the yoke portion 140 in the longitudinal direction.

The wiper blade adapter 120 extends in a longitudinal direction and has an elongate overall shape along the axis A. It comprises a body portion 155a and a head portion 155b. The body portion 155a of the adapter 120 is connected, at a first of its longitudinal ends, to the head portion 155b. The head portion 155b comprises an abutment portion 160 and has a lateral dimension greater than that of the body portion 155a of the wiper blade adapter 120 and a height that is likewise greater than that of the body portion 155a, thus creating a shoulder, the wall of which corresponds to the difference in width and height between the head portion 155b and the body portion 155a. The abutment portion 160 is formed by the shoulder located at the border of the head portion 155b adjacent to the body portion 155a.

As can be seen in the Fig.2a and the Fig.2b, the body portion 155a comprises two lateral walls 165a, 165b, which are substantially parallel to one another and to the axis A and are at a distance from one another. These walls 165a, 165b are connected together at their upper ends by an upper transverse wall 170 that is substantially perpendicular to the walls. The walls 165a, 165b, and 170 in this case have an elongate shape in the longitudinal direction. The walls 165a, 165b, and 170 of the wiper blade adapter 120 between them define a longitudinal space 175 (shown in Fig.2b) in which a part of the yoke portion 140 is intended to be mounted. The lateral walls 165a, 165b of the body portion of the wiper blade adapter 120 are thus set back or offset relative to lateral faces 180a, 180b of the head portion 155b, and its upper wall is set back or offset relative to an upper face 180c of the head portion 155b.

Each lateral wall 165a, 165b of the body portion 155a comprise a throughorifice 185a, 185b. The orifices 185a, 185b in the walls are substantially coaxial and, here, define the axis Y of pivoting of the wiper blade adapter 120 on the connector 130 (shown in Fig.1) and thus of the wiper blade 105 (shown in Fig.1) vis-à-vis the wiper arm 110 (shown in Fig.1). The orifices 185a, 185b are, here, circular in section and each comprise a substantially cylindrical internal surface. The orifices 185a, 185b open at their external lateral ends onto external faces of the walls 165a, 165b respectively, and at their internal lateral ends into the longitudinal space 175 (shown in Fig.2b).

The body portion 155a of the wiper blade adapter 120 comprises magnetic connection region 190 intended to receive at least one magnetic element 195 configured to cooperate with the yoke portion 140 of the wiper arm 110 to secure the wiper arm 110 on the wiper blade adapter 120. The magnetic connection region 190 being located in the vicinity of the abutment portion 160.

The magnetic connection region 190 is arranged on at least one of: at least one longitudinal sidewall 165a, 165b of the body portion 155a, the abutment portion 160, and an upper wall 170 of the body portion 155a.In this embodiment, the magnetic connection region 190 is a cavity so that the at least one magnetic element 195 is embedded in the thickness of the surface of the body portion 155a of the adapter 120..For instance, when the magnetic connection region is arranged on the upper wall 170 of the body portion 155a, then the at least one magnetic element 195 is embedded in the thickness of the surface of the upper wall 170 of the body portion 155a of the adapter 120 in such a way that the upper plane of the at least one magnetic element 195 is substantially aligned with the upper plane of the body portion 155a of the adapter 120.

In an aspect, the at least one magnetic element 195 and the cavity are complementary in shape. As can be seen in the Fig.2a, the magnetic connection region may be a circular cavity arranged on the side walls 165a, 165b. Accordingly, the at least one magnetic element 195 is constructed in a circular shape to accommodate in the circular cavity. Further, the magnetic connection region 190 may also be a rectangular cavity arranged on the upper wall 170 of the body portion 155a. Accordingly, the at least one magnetic element 195 is constructed in a rectangular shape to accommodate in the rectangular cavity. It is understood to a person skilled in the art that dimensions and the shape of the cavity of the magnetic connecting region 190 can be varied depending on the requirement and the space availability. Accordingly, the dimensions of the at least one magnetic element 195 is chosen so as to accommodate in the cavity of the magnetic connection region 190.

For instance, the at least one magnetic element 195 is a permanent magnet, which can be rigidly secured in the magnetic connection region 190 by interaction of shapes, force-fitting, adhesive bonding or overmolding. In an aspect, the at least one magnetic element 195 is made of rare-earth material such as Neodymium, Alnico, Ferrite, Samarium-cobalt, and the like, which can provide strong magnetism, thereby the wiper blade adapter 120 is rigidly secured to the wiper arm 110 in a manner strong enough to withstand the mechanical forces at play when the wiping system 100 is in operation. In an aspect, other compositions of the permanent magnet could also be considered depending on the particular needs of each implementation of the invention.

In an aspect, the at least one magnetic element 195 is configured to exert a force of about 11 N. In other words, it is understood that minimum force required to detach the yoke portion 140 of the wiper arm 110 and the wiper blade adapter 120 is about 11 N. It is understood to a person skilled in the art that the amount of force required to detach the yoke portion 140 and the wiper blade adapter 120 may vary depending on the type of the magnet and the strength of the magnet being implemented. In another aspect, the at least one magnetic element 195 is configured to exert a force of about 30 N. Yet, in another aspect, the at least one magnetic element 195 is configured to exert a force of about 40 N. Yet, in another aspect, the at least one magnetic element 195 is configured to exert a force in range between 10 N to 45 N.

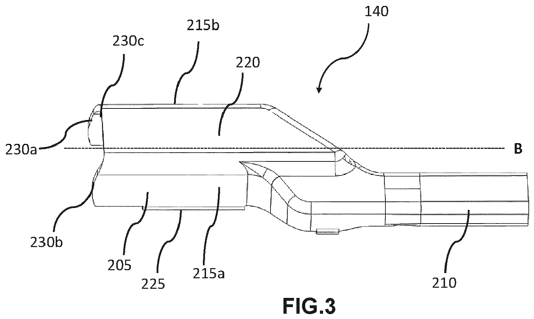

Fig.3 shows a perspective view of a yoke portion of the wiper arm, according to an embodiment of the present invention. As can be seen from the Fig.3, The yoke portion 140 has an elongate shape, the axis of elongation B of which is generally substantially parallel to the axis of elongation or longitudinal axis of the wiper blade 105 when assembled. The yoke portion 140 comprises a first connecting part 205 for connecting the wiper blade adapter 120 and the yoke portion 140, and a second connecting part 210 for connecting the yoke portion 140 to the rest of the wiper arm 110, for example by crimping. The yoke portion 140 is made of metal and comprises two lateral walls 215a, 215b, the upper longitudinal edges of which are connected together by an upper transverse wall 220. Between them, the walls 215a, 215b and the wall 220 delimit a space for accommodating the wiper blade adapter 120. Optionally, at their lower longitudinal edges, the walls 215a, 215b comprise means, such as hooks 225, for retaining the adapter 120 in the abovementioned space. It is understood to a person skilled in the art, an exemplary yoke portion 140 is shown in the Fig.3, and the shape of the yoke portion 140 may vary depending on the configuration of the wiper blade adapter 120. Inner surfaces of the two lateral walls 215a, 215b and/or the inner surface of the upper transverse wall 220 and/or free edges 230a, 230b, 230c of two lateral walls 215a, 215b and the upper transverse wall 220 of the first connecting part 205 of the yoke portion 140 may acts an interacting part, which is intended to interact with the magnetic connection region 190 of the wiper blade adapter 120. The magnetic connection region 190 is therefore the region of contact between the at least one magnetic element 195 of the wiper blade adapter 120 and the interacting part of the yoke portion 140 of the wiper arm 110.

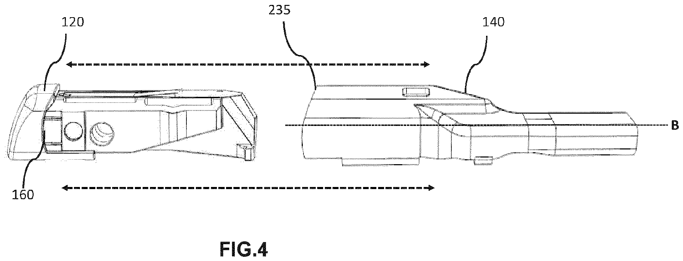

The yoke portion 140 of wiper arm 110 is mounted on the wiper blade adapter 120 in the following manner. Fig.4 shows a general view of the connection between the wiper blade adapter and a yoke portion of the wiper arm. The yoke portion 140 is disposed on the side of the adapter 120, and the yoke portion 140 is moved towards the adapter 120 by translation movement along the axis B. In other words, the body portion 155a of the adapter 120 slides relatively to the yoke portion 140 of the wiper arm 110. This translation movement is continued until a distal end 235 of the yoke portion comes into contact with the abutment portion 160 of the head portion 155b. Thereby, the magnetic field of the at least one magnetic element 195 in the magnetic connection region 190 is concentrated towards the yoke portion 140 of the wiper arm 110 so as to magnetically lock the adapter 120 relative to the yoke portion 140. When the assembly process is completed, the yoke portion 140 is held in place in the longitudinal direction by contact between the end of the yoke portion 140 and the abutment portion 160 of the head portion 155b of the wiper blade adapter 120. The adapter 120 is configured to be retained in the yoke portion 140 of the wiper arm 110, which abuts against the abutment portion 160 when the yoke portion 110 engages with the adapter 120.

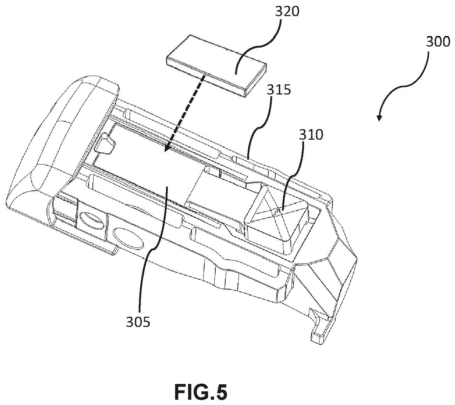

Fig.5 shows a perspective view of a wiper blade adapter of the wiping system according to another embodiment of the present invention. According to this embodiment, the adapter 300 comprises a mechanical connection and a magnetic connection region 305 which are intended to cooperate with the yoke portion 140 of the wiper arm 110 so as to lock the adapter 300 with respect to the yoke portion 140 of the wiper arm 110. Such a configuration would be particularly advantageous for providing more rigid connection between the wiper blade adapter 120 and the wiper arm 110.

The adapter shown in the Fig.5 is provided with a magnetic connection region and a mechanical connection. Differences between the embodiments shown in Fig.2a, Fig.2b and Fig.5 lie in the configuration of the adapter and/or the yoke portion, and also the mechanism of engaging and disengaging the wiper arm 110 and the wiper blade adapter 120. In this embodiment, the adapter 300 is provided with a mechanical connection along with the magnetic connection region 305 as discussed in the previous embodiment. For instance, the mechanical connection includes a push button 310 arranged on the body portion 315 of the adapter. The push button 310 is configured to cooperate with the yoke portion 140 to mechanically engage the wiper blade adapter 300 and the yoke portion 140 of the wiper arm 110. For instance, the upper wall of the yoke portion 140 as discussed in the previous embodiment optionally comprises a through-opening (not shown in Figures) with a shape complementary to the push button 310. In the mounted position, the push button 310 is accommodated in this opening and can pass through the latter so as to protrude from the upper face of the wall of the yoke portion 140. The push button 310 is mounted in the opening by simple insertion or fitting, preferably by elastic snap-fitting. Further, the adapter 300 comprises a magnetic connection region 305 intended to receive at least one magnetic element 320 so as to cooperate with the yoke portion 140 to magnetically lock the adapter 300 and the yoke portion 140 of the wiper arm 110. Hence, according to this embodiment, the wiper blade adapter 300 and the yoke portion 140 of the wiper arm 110 can be rigidly secured by means of the mechanical connection and the magnetic connection.

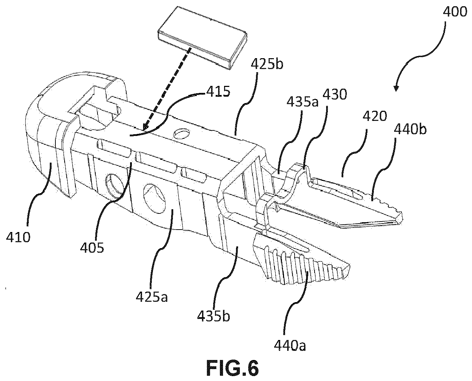

Fig.6 shows a perspective view of an alternative design of a wiper blade adapter of the wiping system having a magnetic connection region, according to an embodiment of the present invention.

As can be seen in the Fig.6, the adapter 400 includes a body portion 405 and a head portion 410. The body portion 405 is provided with a magnetic connection region 415 and a mechanical connection 420. In an aspect, the magnetic connection regions 415 is provided on an upper wall of the body portion 405. In another aspect, the magnetic connection region 415 may be provided on longitudinal side walls of the body portion 405. Further, as can be seen from the Fig.6, the mechanical connection 420 includes a pair of elastically deformable longitudinal tabs 435a, 435b connected by an M-shaped connecting means 430. Each longitudinal side wall 425a, 425b is connected to a tab 435a, 435b, and these tabs being substantially parallel and symmetrical relative to a substantially vertical median longitudinal plane, i.e. perpendicular to the upper wall of the adapter 400. The free ends of the tabs, which are located on the opposite side to the head portion 410, each carry a projecting lateral push button 440a, 440b. Each tab 435a, 435b thus carries a push button 440a, 440b. Elastic deformations of the tabs 435a, 435b occur, here, in a substantially horizontal longitudinal plane, i.e. substantially parallel to the upper wall. The tabs 435a, 435b may be brought closer together by elastic deformation. The push buttons 440a, 440b are shaped to interact with notches (not shown in Figures) of the yoke portion 140 or of another yoke portion, not depicted. The wiper blade adapter 400 and the yoke portion 140 of the wiper arm 110 can be rigidly secured by means of the mechanical connection and/or the magnetic connection.

The present invention is not limited to the adapter configurations as discussed. It is understood to a person skilled in the art the present invention can be implemented with the adapters having various configurations. Similarly, the configuration of the yoke portions to accommodate the adapters may vary depending on the configuration of the adapter.

According to another embodiment, the present invention further relates to a wiper blade 105 of a vehicle wiping system 110 comprising at least one adapter 120, 300, 400 as has just been presented. The adapter 120, 300, 400 is directly connected by a pivoting link to the connector 130 that carries the wiper blade 105. A wiper blade having such an adapter 120, 300, 400 can therefore be fitted to any type of vehicle having the wiper arm complementary to the wiper blade and allowing a magnetic connection and/or a mechanical connection.

According to another embodiment, the present invention also relates to a vehicle wiping system 100 comprising the wiper arm 110 and the wiper blade 105 as has just been presented.

The present invention ensures safe and reliable assembly and disassembly of the wiper blade adapter 120 and the yoke portion 140 of the wiper arm 110. Advantageously, the wiper blade adapter 120 of the proposed invention allows easy replacement of the wiper blade 105 in the event of wear with less effort by sliding the body portion 155a of the adapter 120 relative to the yoke portion 140 of the wiper arm 110. Further, the magnetic connection between the wiper blade adapter 120 and the wiper arm 140 ensures to provide continuous operation of the wiper system 110 at all speeds while providing a good wiping quality. In addition, the magnetic connection between the wiper blade adapter 120 and the yoke portion 140 of the wiper arm 110 would be resistant to the centrifugal force caused by the angular back-and-forth movement of the wiper arm when the wiper system 100 is in operation.

The person skilled in the art realizes that the present invention by no means is limited to the preferred embodiments described above. On the contrary, many modifications and variations are possible within the scope of the appended claims. Also, the skilled person readily realizes that the different embodiments described herein may be combined freely to obtain new combinations.

### LIST OF REFERENCE SIGNS

100 Wiping system
105 Wiper blade
110 Wiper arm
115 Wiper blade rubber
120 Wiper blade adapter
125a, 125b End clips
130 Connector
135 Wiper arm head or drive device
140 Yoke portion
145 Retainer
150 Wiper rod
155a Body portion
155b Head portion
160 Abutment portion
165a, 165b Lateral sidewalls of the adaptor
170 Upper transverse wall of the adaptor
175 longitudinal space
180a, 180b Lateral faces of the head portion
180c Upper face of the head portion
185a, 185b Orifices
190 Magnetic connection region
195 Magnetic element
205 First connecting part
210 Second connecting part
215a, 215b Lateral walls of the first connecting part
220 Upper transverse wall of the first connecting part
225 Hook
230a, 230b, 230c Free edges of two lateral walls 215a, 215b and the upper transverse wall 220
235 Distal end of the yoke portion
300 Adapter
305 Magnetic connection region
310 Push button
315 Body portion of adapter 300
320 Magnetic element
400 Adapter
405 Body portion of adapter 400
410 Head portion of adapter 400
415 Magnetic connection region of adapter 400
420 Mechanical connection of adaptor 400
425a, 425b Longitudinal tabs
430 Connecting means
435a, 435b Sidewalls of adaptor 400
440a, 440b Push buttons of adaptor 400

## Claims

1. An adapter (120) for a vehicle wiper blade (105), the adapter (120) being configured to engage with a yoke portion (140) of a vehicle wiper arm (110) such that the wiper blade (105) is secured on the wiper arm (110), the adapter (120) extends in a longitudinal direction, the adapter (120) comprising:
- a body portion (155a),
- a head portion (155b) comprising an abutment portion (160), the body portion (155a) being configured to slide relatively to the yoke portion (140) of the wiper arm (110) until a distal end of the yoke portion (140) comes into contact with the abutment portion (160) of the head portion (155b), and
- wherein the adapter (120) further comprises a magnetic connection region (190) intended to receive at least one magnetic element (195), wherein the at least magnetic element (195) is configured to cooperate with the yoke portion (140) to secure the wiper arm (110) on the adapter (120) when the distal end of the yoke portion (140) is in contact with abutment portion (160), wherein the magnetic connection region (190) being located in the vicinity of the abutment portion (160).

2. The adapter (120) as claimed in claim 1, wherein the at least one magnetic element (195) is made of rare-earth material such as Neodymium, Alnico, Ferrite, Samarium-cobalt, and the like.

3. The adapter (120) as claimed in claim 1 or 2, wherein the at least one magnetic element (195) is configured to exert a force of about 11 N.

4. The adapter (120) as claimed in claim 1 or 2, wherein the at least one magnetic element (195) is configured to exert a force of about 30 N.

5. The adapter (120) as claimed in claim 1 or 2, wherein the at least one magnetic element (195) is configured to exert a force of about 40 N.

6. The adapter (120) as claimed in claim 1, wherein the abutment portion (160) is formed by a shoulder located at the border of the head portion (155b) adjacent to the body portion (155a).

7. The adapter (120) as claimed in claim 1 or 2, wherein the magnetic connection region (190) is arranged on at least one of: at least one longitudinal sidewall (165a, 165b) of the body portion (155a), the abutment portion (160), and an upper wall (170) of the body portion (155a).

8. The adapter (120) as claimed in any one of claims 1 to 7, wherein the at least one magnetic element (195) is constructed in a rectangular shape or a circular shape.

9. The adapter (120) as claimed in any one of claims 1 to 8, wherein the at least one magnetic element (195) is rigidly secured to the adapter by interaction of shapes, force-fitted, adhesively bonded and/or overmolded.

10. The adapter (120) as claimed in any one of claims 1 to 5, wherein the magnetic connection region (190) comprises a cavity to receive the at least one magnetic element (195).

11. The adapter (120) is claimed in any one of claims 1 to 5, wherein the at least one magnetic element (195) and the cavity are complementary in shape.

12. The adapter (120) as claimed in claim 1, wherein the adapter (120) is configured to be retained in the yoke portion (140) of the wiper arm (110), which abuts against the abutment portion (160) when the wiper arm (110) engages with the adapter (120).

13. The adapter (120) as claimed in claim 1, wherein the head portion (155b) is connected to the body portion (115a) at one of its longitudinal ends.

14. A wiper blade (105) of a vehicle wiping system (100) comprising at least one adapter (120) as claimed in any one of preceding claims.

15. A vehicle wiping system (100) comprising a wiper arm (110), a linkage system, a motor, and the wiper blade (105) as claimed in preceding claim 14.
